(19) Europäisches Patentamt
European Patent Office
Office européen des brevets

(11) EP 1 702 923 A2

(12) # EUROPÄISCHE PATENTANMELDUNG

(43) Veröffentlichungstag:
**20.09.2006 Patentblatt 2006/38**

(51) Int Cl.:
***C07F 9/09*** *(2006.01)*

(21) Anmeldenummer: **06004544.0**

(22) Anmeldetag: **07.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.03.2005 DE 102005012595**

(71) Anmelder: **LANXESS Deutschland GmbH**
**51369 Leverkusen (DE)**

(72) Erfinder:
- **Weiss, Thomas, Dr.**
  **68259 Mannheim (DE)**
- **Grape, Wolfgang, Dr.**
  **51061 Köln (DE)**
- **Elbert, Rainer, Dr.**
  **51469 Bergisch Gladbach (DE)**
- **Hansel, Jan-Gerd**
  **51069 Köln (DE)**
- **Kaulen, Johannes, Dr.**
  **51519 Odenthal (DE)**

(54) **Herstellung von Tri(chlorpropyl) Phosphat**

(57) Die Erfindung beschreibt ein Verfahren zur Herstellung von Tri(chlorpropyl)phosphat (TCPP) unter Einsatz heterogener Katalysatoren auf Basis von Metalloxiden.

EP 1 702 923 A2

## Beschreibung

Die Erfindung betrifft ein Verfahren zur Herstellung von Tri(chlorpropyl)phosphat (TCPP) mittels heterogener Katalyse, die als Flammschutzmittel in Polyurethanen eingesetzt werden können.

Die Herstellung von Tri(chlorpropyl)phosphat (TCPP) ist dem Fachmann bekannt. Dabei wird Phosphoroxichlorid eingesetzt und mit Propylenoxid umgesetzt. Zur Erhöhung der Reaktionsgeschwindigkeit werden häufig Katalysatoren eingesetzt. Für homogen arbeitende Katalysatoren sind dem Fachmann viele Varianten bekannt.

Im allgemeinen müssen aber die erhaltenen Gemische von Konfigurationsisomeren des TCPP, nämlich $(MeCHClCH_2O)_3PO$, $(ClCH_2CH_2CH_2O)_3PO$, $(ClCH_2CH_2CH_2O)(MeCHClCH_2O)_2PO$, $(ClCH_2CH_2CH_2O)_2(MeCHClCH_2O)PO)$ in homogenkatalytisch arbeitenden Systemen aufwändig gereinigt werden. Die Nachbehandlung wird meist durch eine wässrige Aufarbeitung der rohen Reaktionsprodukte erreicht, wobei der Katalysator irreversibel zerstört und abgetrennt wird.

Dies wird z.B. in DD 125 035 beschrieben, wobei Inaktivierung bzw. Zerstörung des Titanhalogenid-Katalysators durch Zugabe einer stöchiometrischen Wassermenge oder Wäsche der phosphorhaltigen Alkoxylierungsprodukte mit Wasser oder Alkalien erreicht wird.

Derartige Nachbehandlungen zur Zerstörung bzw. Inaktivierung des Katalysators haben jedoch Nachteile. Sie erfordern zusätzlich Reaktoren, es kommt zu einer Verschlechterung der Raum-ZeitAusbeute, und es treten Produktverluste auf. Schließlich müssen die anfallenden Waschwässer aufwändig entsorgt werden und der eingesetzte Katalysator ist für die weitere Verwendung verloren.

Die Verwendung von heterogenen Katalysatoren bei der Synthese von TCPP ist bisher nicht bekannt.

Eine kontinuierliche Produktionsmethode von 2-haloalkylierten Phosphaten wird CN 1034206 beschrieben. Hierbei wird BeO eingesetzt. Das Verfahren erlaubt die Herstellung von säurearmen Produkten (Säurezahl < 0,2 mgKOH/gSubstanz) wie $(MeCHClCH_2O)_3PO$, $(ClCH_2CHClCH_2O)_3PO$ und $(ClCH_2CH_2O)_3PO$. Nachteilig bei der Verwendung des Katalysators ist die potentielle Freisetzung von sehr giftige Berylliumsalzen.

In US 3 557 260 wird die Verwendung von Sulfaten verschiedener Elemente vorgeschlagen. Die erforderliche Reaktionszeit liegt bei ca..80 h und dauert im Vergleich zum Stand der Technik für wirtschaftliche Prozesse deutlich länger.

Es bestand daher die Aufgabe ein Verfahren zur Herstellung von TCPP unter Verwendung heterogener Katalysatoren zu entwickeln.

Die Lösung der Aufgabe und Gegenstand der vorliegenden Erfindung ist ein Verfahren zur Herstellung von säurearmem TCPP durch Umsetzung von Phosphoroxichlorid mit Propylenoxiden unter Vermeidung zusätzlicher Wasser - oder Alkaliwäschen der phoshorhaltigen Alkoxylierungsprodukte, dadurch gekennzeichnet, dass heterogene Metalloxid-Katalysatoren der Formel (I)

$$[(X)_1^{3+}(B)_n^{b+}]O_m \qquad (I)$$

eingesetzt werden, worin

X für Aluminium, Titan oder Zirkon steht,

B für ein Metall oder Nichtmetall der Reihe Li, Na, K, Mg, Ca, Sr, Ba, Sc, Y, Ln, Ti, Zr, Hf, V, Nb, Ta, Cr, Mo, W, B, Ga, In, Si, Ge, Sn, Pb, P, As, Sb, Bi steht,

b für die Wertigkeit des Metalls oder Nichtmetalls B steht und eine ganze Zahl von 1 bis 6 bedeutet,

1, n, m für numerische Variablen stehen, die unabhängig zu wählen sind aus den Zahlen 0,0001 bis 4,0000 und wofür

$$2 \cdot m = 1 \cdot 3 + n \cdot b$$

gilt.

Dabei sind die Mischoxide nicht nur als stöchiometrische Kombinationen sondern auch als Kombinationen nichtstöchiometrischer Zusammensetzungen aufzufassen. Dies soll durch das Symbol " * " zum Ausdruck gebracht werden. Insbesondere können auch Kombinationen von Metalloxiden ein und desselben Elements in unterschiedlicher Oxidationsstufe Verwendung finden.

Überraschenderweise wird durch den Einsatz heterogener Metalloxid-Katalysatoren der Formel (I) die wasserfreie Abtrennung des Katalysators von den Edukten und den Reaktionsprodukten ermöglicht. Die leichte Abtrennbarkeit erlaubt es somit auf eine aufwändige Produktwäsche zu verzichten und den Produktionsprozess gegenüber dem Stand der Technik wirtschaftlicher zu gestalten. Andererseits wird auch die Bildung saurer Nebenprodukte unterdrückt, was an den extrem niedrigen Säurezahlen des erfindungsgemäß erhaltenen TCPP sichtbar ist. Darüber hinaus kann der eingesetzte Katalysator in diskontinuierlicher Verfahrensweise erneut eingesetzt werde.

Die heterogenen Katalysatoren zeichnen sich dabei vorzugsweise durch weitgehende Unlöslichkeit im Reaktionsmedium aus und können vom Reaktionsmedium durch einfache nichtwässrige Methoden entfernt werden; beispielsweise durch einfache Filtrationsmethoden oder durch Ausnutzung von Zentrifugalkräften.

In einer bevorzugten Ausführungsform der vorliegenden Erfindung sind die als heterogene Katalysatoren einzusetzenden (Misch)metalloxide Oxide der Nebengruppenelemente des Periodensystems, besonders bevorzugt Oxide der Metalle der Gruppe 13-15 des Periodensystems der Elemente. Dabei wird im Folgenden der Begriff "Periodensystem der Elemente" nach IUPAC (Nomenclature of Inorganic Chemistry 1989) verstanden. Ganz besonders bevorzugt sind die (Misch)metalloxide der Gruppe 3-6, 13, 14 des Periodensystems der Elemente.

Erfindungsgemäß bevorzugt für B sind die Ionen der Elemente:

Na, K, Mg, Ca, Sc, Y, Ti, Zr, W, Si, Sn

Ganz besonders bevorzugte, einfache Oxide sind:

$ZrO_2$, $TiO_2$, $Al_2O_3$

Bevorzugt einzusetzende Mischoxide sind:

$SiO_2*Al_2O_3$, $SnO_2*Al_2O_3$, $TiO_2*Al_2O_3$, $ZrO_2*Al_2O_3$, $WO_3*Al_2O_3$, $Sc_2O_3*Al_2O_3$, $Y_2O_3*Al_2O_3$, $Na_2O*Al_2O_3$, $K_2O*Al_2O_3$, $MgO*Al_2O_3$, $CaO*Al_2O_3$.

$SiO_2*TiO_2$, $SnO_2*TiO_2$, $TiO_2*ZrO_2$, $WO_3*TiO_2$, $Sc_2O_3*TiO_2$, $Y_2O_3*TiO_2$, $Na_2O*TiO_2$, $K_2O*TiO_2$, $MgO*TiO_2$, $CaO*TiO_2$.

$SiO_2*ZrO_2$, $SnO_2*ZrO_2$, $Al_2O_3*ZrO_2$, , $WO_3*ZrO_2$, $Sc_2O_3*ZrO_2$, $Y_2O_3*ZrO_2$, $Na_2O*ZrO_2$, $K_2O*ZrO_2$, $MgO*ZrO_2$, $CaO*ZrO_2$.

$TiO_2*Al_2O_3*ZrO_2$, $TiO_2*Al_2O_3*SiO_2$, $TiO_2*ZrO_2*SiO_2$.

In einer weiteren bevorzugten Variante des erfindungsgemäßen Verfahrens bestehen die einzusetzenden heterogenen Katalysatoren aus Mischmetalloxide und/oder Metallnichtmetalloxiden und können darüber hinaus durch weitere chemische Prozesse modifiziert sein. Beispiele für derartige Modifizierungen sind die Sulfatierung, Hydratisierung oder Calcinierung. Auf diese Weise ist z.B. sulfatiertes $ZrO_2$ bzw. $ZrO_2*H_2O$ zugänglich.

Zur Anwendung als heterogene Katalysatoren bei der Herstellung von TCPP können einerseits physikalisch hergestellte Mischungen von Metalloxiden, z.B. durch Verreibung oder Vermahlung kommen. Andererseits ist auch die Verwendung von heterogen Katalysatoren die mittels Sol/Gel-Verfahren erhalten wurden, möglich.

Die erfindungsgemäß einzusetzenden heterogenen Metalloxid-Katalysatoren eignen sich sowohl für die diskontinuierliche Synthese des TCPP als auch für die kontinuierliche Synthese des TCPP.

In diskontinuierlicher Verfahrensweise wird der heterogene Katalysator dabei vor der Umsetzung von Phosphoroxichlorid mit Propylenoxid oder in zwei oder mehreren Teilmengen vor und während der Reaktion zugegeben werden. Die Umsetzung wird bei Temperaturen von 0 bis 100 °C und drucklos oder unter leichtem Überdruck von bis zu 1 MPa durchgeführt. Typischerweise liegen die Reaktionstemperaturen zwischen 50 bis 80°C. Die phosphorhaltige Ausgangssubstanz wird im Reaktionsgefäß vorgelegt und nach Katalysatorzugabe das entsprechende Alkylenoxid kontinuierlich eindosiert. Nach dem Ende der Propylenoxiddosierung wird bei Temperaturen von 60 bis 130°C eine Nachreaktionsphase angeschlossen und abschließend werden durch eine Vakuumdestillation bzw. ein Stickstoffstripping bei Temperaturen von 90 bis 150°C und Drücken von bis zu < 0,05 MPa leichtflüchtige Verunreinigungen entfernt. Typischerweise erfolgt die Entfernung von leichtflüchtigen Bestandteilen bei 130°C und 40 mbar. Eine Nachbehandlung des Katalysators ist nicht erforderlich. In diskontinuierlichen Herstellverfahren von TCPP werden die Katalysatoren in einer Menge von 0,02 Gew.-% bis 10 Gew.-%, bezogen auf die eingesetzte Phosphorverbindung, angewendet und der phosphorhaltigen Ausgangssubstanz zugesetzt.

Alternativ kann auch in einer kontinuierlichen Arbeitsweise die Synthese von TCPP betrieben werden, wobei beispielsweise Fließbettreaktoren oder Rohrreaktoren zu Einsatz kommen. Dabei ist der heterogene Katalysator die stationäre Phase und das Reaktionsmedium die mobile Phase. Die Reaktionsbedingungen sind dabei ähnlich denen,

wie bei der diskontinuierlichen Fahrweise beschrieben.

Durch die Verwendung heterogener Metalloxid-Katalysatoren erhält man bevorzugt ein TCPP-Gemisch das die Isomeren der Formeln (II) bis (V)

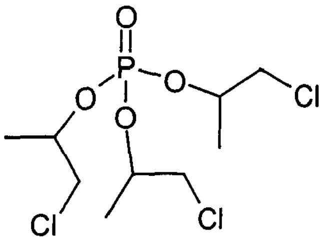

(II)

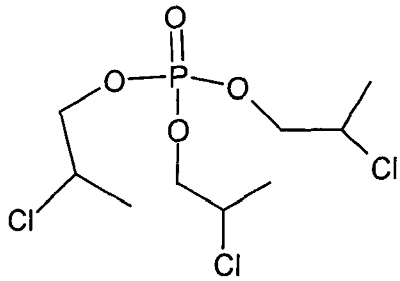

(III)

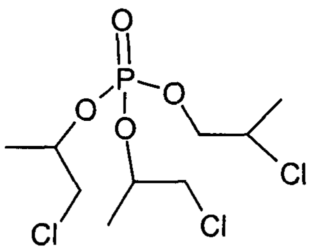

(IV)

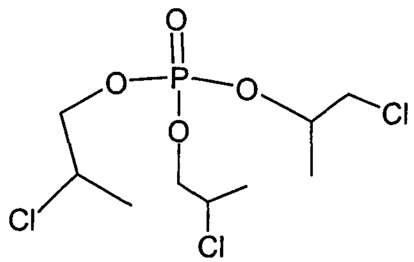

(V)

enthält, wobei bevorzugt das Verhältnis der Isomeren (II)/(III) in der Mischung > 2 ist, vorzugsweise > 10, insbesondere > 50, ganz besonders bevorzugt zwischen 100 und 1 000 ist.

## Beispiele

### Beispiel 1

6 g $Al_2O_3$ werden mit $POCl_3$ (76.8 g, 0,5 mol) zusammen in einen Kolben eingewogen und unter Vakuum über Nacht stehengelassen. Die $POCl_3$ Menge wird danach kontrolliert und ergänzt. Dann wird TCPP (100 g, 0,3 mol) zugeben und Propylenoxid (102g, 1,75 mol) innerhalb von 4 h zudosiert. Es wird 2h bei 45°C nachgerührt.

Ausbeute hergestelltes TCPP : 158g, 96% d.Th.bezogen auf $POCl_3$

Mittels GC-Analyse kann bei einem Umsatz von 100 % die Zusammensetzung des entstandenen TCPP in der TCPP-Endmischung berechnet werden:

Zusammensetzung [GC-F1%]:

| | |
|---|---|
| $(MeCHClCH_2O)_3PO$: | 79,2 |
| $(ClCH_2CH_2CH_2O)_3PO$: | 0,04 |
| $(ClCH_2CH_2CH_2O)(MeCHClCH_2O)_2PO$: | 16,6 |
| $(ClCH_2CH_2CH_2O)_2(MeCHClCH_2O)PO$: | 1,1 |
| TCPP-Ether: | 0,8 |

### Beispiel 2

| Katalysator | $T_R$ [°C] | $^{31}$P-NMR [Mol % TCPP] 0 bis -5,5 ppm | Rest-PO [GCFl%] | OP(Oiso)3 | OP(On)3 | OP(Oiso)2(On) | OP(Oiso)(On)2 | TCPP-Ether | 2-MP | SZ mg KOH/g Probe | AAS [ppm Metall] |
|---|---|---|---|---|---|---|---|---|---|---|---|
| | | | | | | | | | | | |
| $TiCl_4$ nicht erfindungsmäß | 65 | | 0,01 | 66,3 | 0,2 | 25,6 | 3,7 | 2,9 | 0,1 | | |
| | | | | | | | | | | | |
| $TIO_2$ (RO13) | 55 | 71,3 | 0,34 | 39,6 | 4,5 | 23,8 | 0,4 | 7,6 | 0,0 | 4,27 | |
| $TIO_2$ (RO13) | 75 | 82,3 | 1,98 | 37,5 | 6,9 | 27,6 | 0,7 | 7,5 | 0,0 | 7,1 | 62 |
| $ZrO_2$ (RO130) | 45 | 43,3 | 0,31 | 12,4 | 2,4 | 14,7 | 6,6 | 7,2 | 0,0 | 35,7 | |
| $ZrO_2$ (RO130) | 75 | 72,1 | 1,90 | 20,9 | 1,2 | 20,9 | 8,2 | 12,3 | 0,0 | | 91 |
| $SiO_2Al_2O_3$ (GO202) | 75 | 97,1 | 2,92 | 48,2 | 0,8 | 31,7 | 8,4 | 3,1 | 0,0 | 8,9 | < 1 |
| $ZR(OZ)_2WO_3$ (RO129) | 55 | 14,5 | 4,73 | 14,8 | 1,6 | 13,8 | 5,0 | 5,7 | 0,0 | | |
| $Al_2O_3$ (CSS 350) | 75 | 98,2 | 4,84 | 50,0 | 0,5 | 29,7 | 6,3 | 3,3 | 0,0 | < 1,0 | 18 |
| $Al_2O_3$ (CSS 350)MgO | 75 | 96,3 | 6,21 | 51,7 | 0,5 | 23,9 | 5,2 | 2,5 | 0,0 | < 1,0 | |

Allgemeine Arbeitsvorschrift:

Es werden 5 g $POCl_3$ vorgelegen und mit dem Katalysator (1g) versetzt. Dann wird auf 50°C erwärmt und mittels einer Telabpumpe Typ BF 411/30 (Einstellung Pumpe HUB = 30; Leistung = 50 % = ca. 0,5 ml/min) eine Mischung von 11,7 g ( 7 ml ) $POCl_3$ und 20,9 g (25,1 ml) Propylenoxid zugetropft. Die Temperatur wird dabei durch Kühlung mittels Wasserbad zwischen 40 und 50°C (60 und 70°C) eingehalten. Nach Abschluss der Zugabe (GC/NMR) folgt eine Nachrührzeit von 180 min bei 50°C (70°C) mit anschließender Analyse mittels GC bzw. 31P-NMR, Säurezahlbestimmung und Metallgehalt durch Atomabsorptionsspektroskopie.

## Patentansprüche

1. Verfahren zur Herstellung von säurearmem TCPP durch Umsetzung von Phosphoroxichlorid mit Propylenoxiden unter Vermeidung zusätzlicher Wasser- oder Alkaliwäschen der phosphorhaltigen Alkoxylierungsprodukte, **dadurch gekennzeichnet, dass** heterogene Metalloxid-Katalysatoren der Formel (I)

$$[(X)_1{}^{3+}(B)_n{}^{b+}]O_m \qquad (I)$$

eingesetzt werden, worin

X für Aluminium, Titan oder Zirkon steht,
B für ein Metall oder Nichtmetall der Reihe Li, Na, K, Mg, Ca, Sr, Ba, Sc, Y, Ln, Ti, Zr, Hf, V, Nb, Ta, Cr, Mo, W, B, Ga, In, Si, Ge, Sn, Pb, P, As, Sb, Bi steht,
b für die Wertigkeit des Metalls oder Nichtmetalls B steht und eine ganze Zahl von 1 bis 6 bedeutet,
l, n, m für numerische Variablen stehen, die unabhängig zu wählen sind aus den Zahlen 0,0001 bis 4,0000 und wofür

$$2 \cdot m = l \cdot 3 + n \cdot b$$

gilt.

2. Verfahren gemäß Anspruch 1, **dadurch gekennzeichnet, dass** als Katalysatoren Mischungen von unterschiedlichen Oxiden oder Mischoxide eingesetzt werden.

3. Verfahren gemäß Anspruch 1, **dadurch gekennzeichnet, dass** als Katalysatoren $TiO_2$, $ZrO_2$, $Al_2O_3$ oder $SiO_2{*}Al_2O_3$ eingesetzt werden.

4. Verfahren nach Anspruch 1, **dadurch gekennzeichnet, dass** dieses diskontinuierlich oder kontinuierlich betrieben wird.

5. Verfahren gemäß Anspruch 1, **dadurch gekennzeichnet, dass** man ein Isomerengemisch der Verbindungen (II) bis (V) erhält

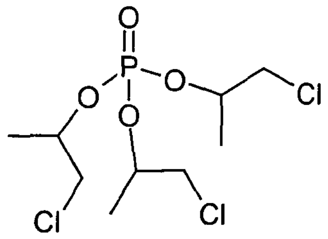

(II)

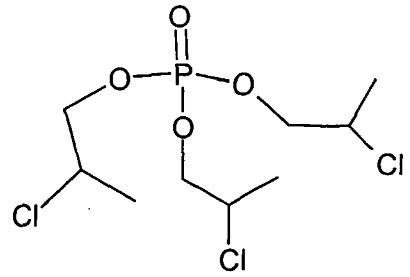

(III)

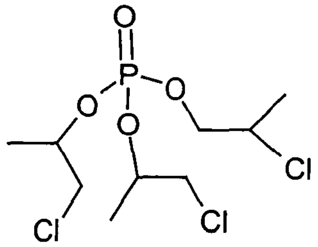

(IV)

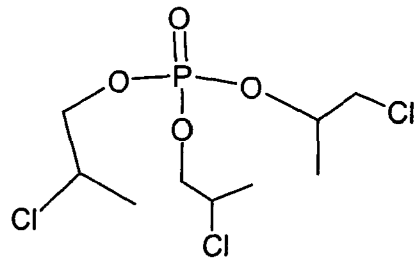

(V)

und das Verhältnis der Isomere (II)/(III) in der Mischung > 2 ist.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DD 125035
- CN 1034206
- US 3557260 A